# EUROPÄISCHE PATENTANMELDUNG

(11) **EP 2 579 505 A1**
(43) Veröffentlichungstag der Anmeldung: **10.04.2013**
(21) Anmeldenummer: 12180806.7
(22) Anmeldetag: 17.08.2012
(51) Int. Cl.: H04L 12/12, H04L 12/28

(54) **Verfahren und System zur Fernsteuerung eines elektrischen Verbrauchers**

(30) Priorität: 05.10.2011 EP 11183896
(71) Anmelder: Swisscom AG, 3050 Bern (CH)
(72) Erfinder: Martschitsch, Andreas, 3006 Bern (CH)
(74) Vertreter: P&TS SA (AG, Ltd.)

(57) **Zusammenfassung**

Verfahren zur Fernsteuerung eines elektrischen Verbrauchers (3₀, 3₁, 3₂, ..., 3ₙ) mit einem Stromadapter (2₀, 2₁, 2₂, ..., 2ₙ) zur Ein- und Abschaltung der Stromzufuhr des elektrischen Verbrauchers (3₀, 3₁, 3₂, ..., 3ₙ), wobei ein zentraler E-Server (4) in Abhängigkeit vom automatisch erkannten Typs des elektrischen Verbrauchers (3₀, 3₁, 3₂, ..., 3ₙ) ein dem Typ des elektrischen Verbrauchers zugeordnetes Stromsparprofil auswählt und den Stromadapter (2₀, 2₁, 2₂, ..., 2ₙ) in Abhängigkeit des ausgewählten Stromsparprofils durch das Ein- und Abschalten der Stromzufuhr des elektrischen Verbrauchers (3₀, 3₁, 3₂, ..., 3ₙ) ansteuert, wobei das Stromsparprofil die Steuerung der Stromzufuhr des elektrischen Verbrauchers (3₀, 3₁, 3₂, ..., 3ₙ) enthält.

## Beschreibung

### Technisches Gebiet

Die Erfindung bezieht sich auf ein Verfahren und System zur Fernsteuerung eines elektrischen Verbrauchers entsprechend den unabhängigen Ansprüchen. Vorteilhafte Ausführungsformen sind in den abhängigen Ansprüchen angegeben.

### Stand der Technik

Es sind Lösungen im Stand der Technik bekannt, um elektronische Geräte ferngesteuert oder nach einer bestimmten Zeit ein-und auszuschalten, beispielsweise um Strom zu sparen. So beschreibt EP2105822 ein elektronisches Gerät, zum Beispiel einen Videorekorder, welches Informationen über ein Fernsehprogramm über "Internetsignale" ermittelt und sich entsprechend ein- oder ausschaltet.

GB2384926 beschreibt eine Set-Top Box oder einen Videorekorder mit einem Timer, um das Gerät automatisch an vorbestimmten Zeiten ein- oder ausschalten. Diese Zeiten können mit einem Elektronischen Programm Guide (EPG) ermittelt werden, oder sie werden so ausgewählt, dass die Geräte nicht während einer Aufnahme ausgeschaltet werden.

US20070173221 offenbart das Ein- und Ausschalten einer Set-Top Box in Abhängigkeit der Batterie-Kapazität und der Länge des Broadcastprograms. Wenn die Batterie nicht ausreichend aufgeladen ist, können Prioritäten zwischen verschiedenen Broadcast-Programmen verwendet werden, um das aufzuzeichnende Programm zu bestimmen. Daten eines EPG können zur Steuerung berücksichtigt werden.

US20060109384 offenbart einen Sensor, der den Stromverbrauch eines Fernsehgeräts überwacht, um zu bestimmen, ob ein Videorekorder ein- oder ausgeschaltet werden soll.

GB2443454 offenbart einen Sensor, der den Stromverbrauch eines Fernsehgeräts überwacht, um es und andere Geräte ganz auszuschalten, wenn es im Standby Mode ist.

Der Artikel "Enabling Applicability of Energy Saving Applications on the Appliances of the Home Environment" von Spyridon Tompros, Nikolaos Mouratidis, Maurice Draaijer, Andreas Foglar und Halid Hrasnica veröffentlicht in IEEE Network, November/Dezember 2009, Seite 8 bis 16 offenbart eine Softwarelösung zur Messung des Energieverbrauchs. Anstatt den Energieverbrauch zu physikalisch zu messen, wird der aktuelle Programmzustand in einem Verbraucher abgefragt und der Energieverbrauch in diesem Programmzustand in einem Profil des Verbrauchers nachgeschlagen. Auf der Basis des so ermittelten Verbrauchs aller Verbraucher in einem Haushalt, werden einzelne Verbraucher in ein energiesparenderendes Programm umgeschaltet oder ganz ausgeschaltet, wenn der Verbrauch des ganzen Haushalts ein Maximum überschreitet.

### Darstellung der Erfindung

Es ist ein Ziel der Erfindung, ein Verfahren und System zum Energiesparen bei Haushaltsgeräten zu schaffen.

Es ist ein weiteres Ziel der vorliegenden Erfindung, ein Verfahren und System zur zentralen Steuerung von Haushaltsgeräten zu schaffen.

Es ist ein weiteres Ziel der vorliegenden Erfindung, ein Verfahren und System zu schaffen, mit dem der Benutzer seine Haushaltsgeräte manuell oder automatisch fernsteuern kann.

Es ist ein weiteres Ziel der vorliegenden Erfindung, ein Verfahren und System zu schaffen, mit dem der Benutzer einen Überblick über den Stromverbrauch seiner Haushaltsgeräte bekommt und die Möglichkeit hat, den Stromverbrauch zu senken.

Erfindungsgemäss werden diese Ziele durch die Merkmale entsprechend den unabhängigen Patentansprüchen erreicht. Insbesondere durch ein Verfahren oder System zur Fernsteuerung eines elektrischen Verbrauchers mit einem Stromadapter zur Ein- und Abschaltung der Stromzufuhr des elektrischen Verbrauchers. Ein zentraler E-Server wählt in Abhängigkeit vom automatisch erkannten Typs des elektrischen Verbrauchers ein abgespeichertes und dem Typ des elektrischen Verbrauchers zugeordnetes Stromsparprofil aus und steuert den Stromadapter in Abhängigkeit des ausgewählten Stromsparprofils so an, dass die Stromzufuhr des elektrischen Verbrauchers entsprechend dem Stromsparprofil ein- oder abgeschaltet wird. Das Stromsparprofil enthält die Steuerung der Stromzufuhr des elektrischen Verbrauchers.

Weitere vorteilhafte Ausführungsformen sind in den Unteransprüchen angegeben.

In einem Ausführungsbeispiel misst der Stromadapter den Stromverbrauch des elektrischen Verbrauchers misst und übermittelt die Daten des Stromadapters kontinuierlich an den E-Server.

In einem Ausführungsbeispiel ermittelt der E-Server den Typ des elektrischen Verbrauchers. Der Typ des elektrischen Verbrauchers kann zum Beispiel auf der Basis des gemessenen Stromverbrauchs des elektrischen Verbrauchers bestimmt werden. Der Typ des elektrischen Verbrauchers kann alternativ auf der Basis von Protokollen bestimmt.

Alternativ kann der Typ des elektrischen Verbrauchers dem E-Server von einem Kunden bekannt geben werden.

In einem Ausführungsbeispiel speichert der E-Server Verbrauchsdaten des elektrischen Verbrauchers in einer Datenbank speichert.

In einem Ausführungsbeispiel kontaktiert der E-Server einen zweiten Server und ermittelt, wann der elektrische Verbraucher eingeschaltet werden soll.

In einem Ausführungsbeispiel kann ein Kunde die Stromzufuhr zu dem elektrischen Verbraucher einschalten, indem er auf den E-Server über das Internet oder ein Mobilfunknetz zugreift und einen entsprechend Befehl eingibt.

In einem Ausführungsbeispiel kommunizieren der E-Server und die Stromadapter über das Internet oder ein LAN miteinander.

In einem Ausführungsbeispiel enthält das Stromsparprofil die Steuerung der Stromzufuhr des elektrischen Verbrauchers, die durch gezieltes Ein- und Ausschalten den Stromverbrauch des elektrischen Verbrauchers reduziert ohne die eigentliche Funktion des elektrischen Verbrauchers zu beeinträchtigen.

In einem Ausführungsbeispiel ist der elektrische Verbraucher ein Kühlschrank, ein Videorekorder, eine Set-Top-Box, eine Stereoanlage, ein Fernseher (TV) oder ein internetbasierter Fernseher (TV) ist.

In einem Ausführungsbeispiel weist der Stromadapter (2₀, 2₁, 2₂, ..., 2ₙ) ein Gehäuse auf mit einem Stecker zur Verbindung mit der Stromversorgung und eine Steckdose zur Verbindung mit dem elektrischen Verbraucher (3₀, 3₁, 3₂, ..., 3ₙ) auf. Der Stromadapter kann somit für eine Vielzahl von elektrischen Verbrauchern verwendet werden.

### Kurze Beschreibung der Figuren

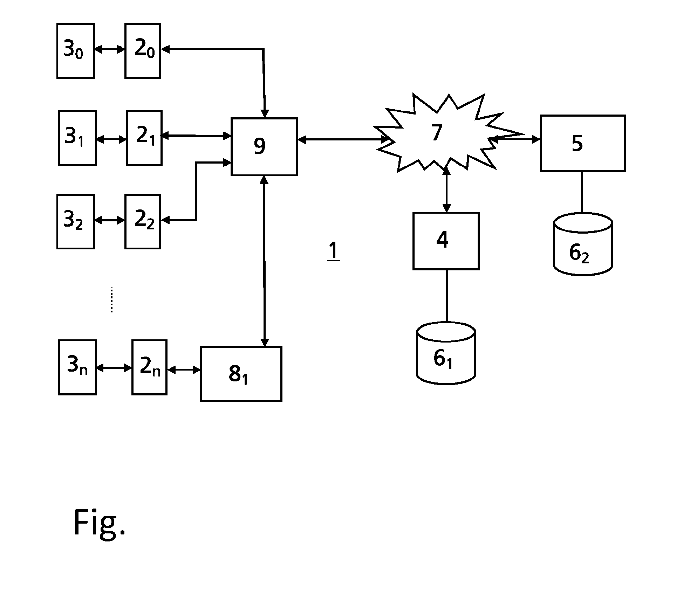

Die Erfindung wird anhand der beigefügten Figuren näher erläutert, wobei die einzige Figur das erfinderische System und Verfahren illustriert.

### Wege zur Ausführung der Erfindung

Die erfindungsgemässe System 1 wird beispielhaft in der einzigen Figur illustriert. Eine Vielzahl von elektrischen Verbrauchern 3₀, 3₁, 3₂, ..., 3ₙ sind jeweils mit einem Stromadapter 2₀, 2₁, 2₂, ..., 2ₙ verbunden. Die Stromadapter 2₀, 2₁, 2₂, ..., 2ₙ haben eine Vielzahl von Aufgaben und können insbesondere die Stromversorgung zu dem zugeordneten Stromadapter 2₀, 2₁, 2₂, ..., 2ₙ ein- und abschalten. Zu diesem Zweck werden die Stromadapter 2₀, 2₁, 2₂, ..., 2ₙ zwischen einer Stromversorgung und den elektrischen Verbrauchern angeschlossen. In einem Ausführungsbeispiel sind die Stromadapter 2₀, 2₁, 2₂, ..., 2ₙ als Hardware ausgeführt. Vorzugsweise weist ein solcher Stromadapter 2₀, 2₁, 2₂, ..., 2ₙ ein Gehäuse auf, das einen Stecker für die Verbindung mit dem Stromnetz und eine Steckdose für die Verbindung mit dem zu dem Stromadapter zugeordneten elektrischen Verbraucher 3₀, 3₁, 3₂, ..., 3ₙ aufweist. Der Stecker und die Steckdose eines Stromadapters 2₀, 2₁, 2₂, ..., 2ₙ sind zur Durchleitung des Stroms z.B. durch ein Kupferkabel miteinander verbunden. Der Stromadapter 2₀, 2₁, 2₂, ..., 2ₙ kann auch mehrere Steckdosen zur Verbindung mit mehreren elektrischen Verbrauchern 3₀, 3₁, 3₂, ..., 3ₙ aufweisen. Alternativ kann der Stromadapter 2₀, 2₁, 2₂, ..., 2ₙ auch bereits in einem elektrischen Verbraucher 3₀, 3₁, 3₂, ..., 3ₙ integriert sein. In einem solchen Ausführungsbeispiel weist der Stromadapter 2₀, 2₁, 2₂, ..., 2ₙ nur einen Stecker auf. Der Stromadapter 2₀, 2₁, 2₂, ..., 2ₙ ist direkt, d.h. ohne eine Steckdose, mit dem Stromeingang des Verbrauchers 3₀, 3₁, 3₂, ..., 3ₙ verbunden. Allerdings ist es in einem anderen Ausführungsbeispiel auch möglich den Stromadapter 2₀, 2₁, 2₂, ..., 2ₙ als Software zu realisieren, die in dem elektrischen Verbraucher 3₀, 3₁, 3₂, ..., 3ₙ und/oder einer sonstigen zentralen Einheit des Haushaltsnetzes angeordnet ist. Es werden in der einzigen Figur drei elektrische Verbraucher 3₀, 3₁, 3₂, ..., 3ₙ mit jeweils einem Stromadapter 2₀, 2₁, 2₂, ..., 2ₙ dargestellt. Dies ist jedoch nur beispielshaft zur Illustration geschehen. Die Anzahl der elektrischen Verbraucher 3₀, 3₁, 3₂, ..., 3ₙ ist im Rahmen der Erfindung in keiner Weise beschränkt. Im Rahmen der Erfindung können auch mehrere elektrische Verbraucher 3₀, 3₁, 3₂, ..., 3ₙ an einen einzigen Stromadapter angeschlossen werden (z.B. wenn dieser die Ausführungsform Steckdosenleiste hat, nicht dargestellt).

Als elektrische Verbraucher 3₀, 3₁, 3₂, ..., 3ₙ können allgemein Haushaltsgeräte genannt werden. Insbesondere sind im Rahmen der vorliegenden Erfindung Kühlschränke, Videorekorder, Set-Top-Boxen, Stereoanlagen, Fernseher (TV), internetbasierte Fernseher (TV), Kaffeemaschinen, Lampen, etc. möglich. Allgemein können es auch Haushaltsgeräte sein, die ausgeschaltet werden können, um auf diese Weise Strom zu sparen (und z.B. den Standby-Modus zu vermeiden), ohne die eigentliche Funktion des Geräts zu beeinträchtigen, Kühlschränke können also beispielsweise abgeschaltet werden, sobald dies eine gewisse Zeitdauer nicht überschreitet und die Kühlfunktion gewährleistet wird. Die elektrischen Verbraucher sind im Rahmen der Erfindung nicht auf Haushaltsgeräte beschränkt, sondern können elektrische Verbraucher jeder Art sein, inklusive Bürogeräte.

Gleichzeitig messen die Stromadapter 2₀, 2₁, 2₂, ..., 2ₙ den Stromverbrauch der angeschlossenen elektrischen Verbraucher 3₀, 3₁, 3₂, ..., 3ₙ kontinuierlich und übermitteln die Daten des Stromverbrauches an einen E-Server 4. Vorzugsweise enthalten die Stromadapter 2₀, 2₁, 2₂, ..., 2ₙ einen Sensor zur Messung des Stromverbrauchs. Die Daten können kontinuierlich und in Echtzeit oder an vordefinierten Zeitpunkten an einen E-Server 4 übermittelt werden. Die Stromadapter kommunizieren über einen Router 9 mit dem E-Server 4. Je nach Ausführungsvariante können die Stromadapter 2₀, 2₁, 2₂, ..., 2ₙ über ein verkabeltes Netzwerk (z.B. LAN, Stromnetzwerk) oder über ein kabelloses Netzwerk, z.B. eine Wireless LAN mit dem Router 9 kommunizieren. Zur Verbindung der Stromadapter 2₀, 2₁, 2₂, ..., 2ₙ mit einem anderen Netzwerk als das Stromnetz, weist der Stromadapter 2₀, 2₁, 2₂, ..., 2ₙ eine Schnittstelle zur Verbindung mit dem Netzwerk auf. Die Routerfunktionalität kann auch im Stromadapter 2 vorhanden sein. Die Daten von allen angeschlossenen Stromadaptern 2₀, 2₁, 2₂, ..., 2ₙ werden in einer Datenbank 6₁, die an den E-Server 4 angeschlossen oder Teil von ihm ist, gespeichert. Diese Daten enthalten insbesondere den gemessenen Stromverbrauch der mit den jeweiligen Stromadaptern 2₀, 2₁, 2₂, ..., 2ₙ verbundenen Verbraucher 3₀, 3₁, 3₂, ..., 3ₙ. Der E-Server 4 ist netzwerkbasiert und die Kommunikation zwischen den Stromadapter 2₀, 2₁, 2₂, ..., 2ₙ und dem zentralen E-Server 4 erfolgt zum Beispiel über das Internet 7. Allerdings ist es auch möglich, dass der E-Server 4 in dem Haushaltsnetzwerk, z.B. dem LAN oder dem Stromnetz angeordnet ist und die Kommunikation zwischen den Stromadaptern 2₀, 2₁, 2₂, ..., 2ₙ und dem E-Server 4 über das LAN oder das Stromnetz erfolgt. Die Grundfunktion des E-Servers 4 ist die Steuerung (Ein- und Ausschaltung) der Stromversorgung einzelner Verbraucher 3₀, 3₁, 3₂, ..., 3ₙ durch Ausgabe eines entsprechenden Befehls an den entsprechenden Stromadapter 2₀, 2₁, 2₂, ..., 2ₙ. Die Durchleitung des Stroms zu dem elektrischen Verbraucher 3₀, 3₁, 3₂, ..., 3ₙ durch den Stromadapter 2₀, 2₁, 2₂, ..., 2ₙ kann in einem Ausführungsbeispiel auch direkt am Adapter manuell ein- und ausgeschaltet werden, z.B. über einen am Stromadapter 2₀, 2₁, 2₂, ..., 2ₙ angebrachten Schalter. Auf diese Weise kann die automatische, servergeführte Steuerung von dem Benutzer manuell überstimmt werden.

Für den E-Server 4 ist es möglich, aufgrund der Verbrauchsdaten mittels Analyse oder Data Mining-Verfahren den Typ des elektrischen Verbrauchers genau (z.B. Kühlschrank AEG 234-23) oder möglichst genau (z.B. Kühlschrank) zu bestimmen. In einem anderen Ausführungsbeispiel kann der E-Server 4 den Gerätetyp zum Beispiel auch anhand von Protokollen ermitteln, z.B. via Universal Plug and Play (UPnP). Dabei erkennt der E-Server 4 den Typ des elektrischen Verbrauchers auf der Basis von über das Stromnetz vom Verbraucher gesendeten Informationen. Die Datenbank 6₁ enthält jeweils ein Stromsparprofil für eine Vielzahl von Typen von elektrischen Verbrauchern. Insbesondere enthält das Stromsparprofil, wie durch gezieltes Ein- und Ausschalten der Stromverbrauch dieses Typs des elektrischen Verbrauchers reduziert werden kann. In einem Ausführungsbeispiel wird durch das Stromsparprofil eines Typs eines elektrischen Verbrauchers bestimmt, wie die Stromzufuhr zu einem solchen elektrischen Verbraucher periodisch ein-und ausgeschaltet werden muss, um die Funktion des Verbrauchers auch während der ausgeschalteten Zeit aufrechtzuerhalten. In einem anderen Ausführungsbeispiel sind in den Daten die Zeiten enthalten, in denen der Verbraucher in der Regel nicht benutzt wird (z.B. Nachts zwischen Mitternacht und morgens 6 Uhr) und somit ausgeschaltet werden kann. Der E-Server 4 weiss aufgrund des Typs des elektrischen Verbrauchers und der hinterlegten Daten in der Datenbank 6₁, wie durch intelligente Steuerung der Stromzufuhr (gezieltes Ein- und Ausschalten) der Stromverbrauch jeden einzelnen elektrischen Verbrauchers 3₀, 3₁, 3₂, ..., 3ₙ zusätzlich reduziert werden kann. Die Verbindung zwischen den individuellen Stromadaptern 2₀, 2₁, 2₂, ..., 2ₙ und dem E-Server 4 kann über einen PC 8₁ und den Router 9 des Kunden, beispielsweise über eine USB-Schnittstelle und/oder über eine drahtlose Verbindung hergestellt werden. Der PC 8₁ empfängt die Daten, die von den Stromadaptern 2₀, 2₁, 2₂, ..., 2ₙ übertragen werden, und sendet diese vorzugsweise in Echtzeit an den E-Server 4. Der E-Server 4 sichert die Daten in der Datenbank 6₁ und macht sie in einem persönlichen internetbasierten Portal des Benutzers sichtbar.

Ausführungsbeispiel 1. Kühlschrank. Der E-Server 4 ermittelt aufgrund der übermittelten Verbraucherdaten, dass es sich beim angeschlossenen elektrischen Verbraucher z.B. um einen Kühlschrank AEG 234-23 handelt. Der E-Server 4 weiss aufgrund des zu diesem Typ abgelegten Stromsparprofiles, wie der Kühlschrank, z.B. 3₀ zusätzlich ein-und ausgeschaltet werden kann (z.B. kontinuierlich ein Stunde ein und dann dreissig Minuten aus), um den Stromverbrauch zusätzlich zu reduzieren. Dadurch wird zwar der Stromverbrauch reduziert, aber nicht die Funktion des Kühlschranks eingeschränkt. Er erstellt aus den übermittelten Daten ein Steuerungsprofil. Der E-Server 4 übermittelt die Steuerungsdaten an den entsprechenden Stromadapter, z.B. 2₀ der die Ein-und Ausschaltungen vornimmt.

Zusätzlich ist ein zweiter Server 5 mit einer Kundendatenbank 6₂ vorhanden, der vorzugsweise ein IPTV- oder WebTV Server ist. Die Abkürzung "IPTV" steht für "Internet Protokoll Television". Über ein abgeschirmtes Netzwerk via Internet 7 werden TV-Inhalte zum Endkunden übertragen und mittels Set-Top-Box, z.B. als elektrischer Verbraucher 3₁, an einem TV-Gerät dargestellt. Der Kunde hat dazu ein bestimmtes Abonnement bei dem IPTV-Anbieter. Sofern eine Aufnahme programmiert ist, kann der IPTV Server 5 den E-Server 4 informieren, dass die Stromzufuhr zu der Set-Top Box oder einem Videorekorder des Kunden zu aktivieren ist. Die Verbindung zwischen den Servern 4 und 5 kann sowohl über das Internet 7, wie auch, z.B. über ein LAN erfolgen (nicht dargestellt). Nach erfolgreicher Aufnahme wird die Stromversorgung des elektrischen Verbrauchers 3₁ mittels des Stromadapters 2₁ wieder abgeschaltet.

Ein Kunde kann die Stromzufuhr zu einem Verbraucher 3₀, 3₁, 3₂, ..., 3ₙ einschalten, indem er auf den E-Server 4 über das Internet 7 oder ein Mobilfunknetz zugreift und einen entsprechend Befehl manuell eingibt. Dazu ist der E-Server 4 über das erwähnte, persönliche und internetbasierte Portal (Webseite) mit dem PC 8₁ erreichbar, wo der Kunde personalisiert seine eigenen Stromadapter 2₀, 2₁, 2₂, ..., 2ₙ und den übermittelten Stromverbrauch der zugeordneten elektrischen Verbraucher 3₀, 3₁, 3₂, ..., 3ₙ und ggf. Zusatzinformationen einsehen kann. Über diese Verbindung kann er auch Änderungen von elektrischen Verbrauchern 3₀, 3₁, 3₂, ..., 3ₙ oder Marken- oder Verbrauchertypangaben entsprechend eingeben oder er kann die Steuerung des Ein- und Ausschaltens seiner Geräte ebenfalls dort nach einem individuellen Zeitplan programmieren. Der Kunde kann ebenfalls auf die Webseite des E-Servers 4 über eine internetbasierte Mobilfunkverbindung Zugriff haben. Die Webseite des E-Servers 4 wird ebenfalls Zugang zu individuellen Ratschlägen zu den übermittelten Messdaten des Energieverbrauchs des Kunden geben und einen Austausch über ein Netzwerk von Energiefachleuten sowie über sein soziales Netzwerk (Freunde, Familie usw.) anbieten.

Ausführungsbeispiel 2. Set-Top Box. Der E-Server 4 ermittelt aufgrund der übermittelten Verbraucherdaten, dass es sich beim angeschlossenen elektrischen Verbraucher um eine Set-Top Box z.B. vom Typ Cisco 2345-AB handelt. Alternativ kann der Kunde bei der Installation und Einrichtung des Stromadapters, dem E-Server 4 manuell über eine Webseite, etc. bekanntgeben, dass er eine Set-Top Box diesen Typs angeschlossen hat. Der E-Server 4 weiss aufgrund des zu diesem Typ abgelegten Stromsparprofiles, dass die Stromzufuhr zur Set-Top Box immer dann unterbrochen werden kann, wenn sie sich im Standby befindet und keine Aufnahmen laufen. Der Kunde registriert sich auf dem E-Server 4 mit seinen IPTV Accountdaten. Der E-Server 4 kontaktiert den IPTV Server 5 und ermittelt, wann die nächste Aufnahme stattfinden soll. Alternativ kontaktiert der IPTV Server 5 den E-Server 4 und teilt diesem mit, wann die nächste Aufnahme stattfinden soll. Wurde die Stromzufuhr zum elektrischen Verbraucher vom E-Server 4 unterbrochen, so schaltet der E-Server 4 nun kurz vor einer einstellbaren Zeit die Set-Top Box wieder ein, so dass sie für die Aufnahme bereit ist. Da der E-Server 4 aufgrund der mit dem IPTV System ausgetauschten Daten weiss, wie lange eine Aufnahme läuft, kann der Verbraucher anschliessend wieder ausgeschaltet werden. Möchte der Kunde seine Set-Top Box nutzen während die Stromzufuhr zur Set-Top Box unterbrochen ist, so kann der Kunde via Smartphone Anwendung über ein Mobilfunknetz oder Web-Anwendung über den PC 8₁ und das Internet 7 auf den E-Server 4 zugreifen und die Set-Top Box innert Sekundenbruchteilen wieder einschalten.

### Bezugszeichenliste

- 1: System zur Fernsteuerung
- 2₁, 2₂: Stromadapter
- 3₁, 3₂: Verbraucher, Endgeräte
- 4: E-Server
- 5: IPTV Server
- 6₁: Datenbank
- 6₂: Datenbank
- 7: Internet
- 8₁: Personal Computer PC
- 9: Router

## Patentansprüche

1. Verfahren zur Fernsteuerung eines elektrischen Verbrauchers (3₀, 3₁, 3₂, ..., 3ₙ) mit einem Stromadapter (2₀, 2₁, 2₂, ..., 2ₙ) zur Ein- und Abschaltung der Stromzufuhr des elektrischen Verbrauchers (3₀, 3₁, 3₂, ..., 3n),
**dadurch gekennzeichnet, dass**
ein zentraler E-Server (4) in Abhängigkeit vom automatisch erkannten Typ des elektrischen Verbrauchers (3₀, 3₁, 3₂, ..., 3ₙ) ein dem Typ des elektrischen Verbrauchers zugeordnetes Stromsparprofil auswählt und den Stromadapter (2₀, 2₁, 2₂, ..., 2ₙ) in Abhängigkeit des ausgewählten Stromsparprofils durch das Ein- und Abschalten der Stromzufuhr des elektrischen Verbrauchers (3₀, 3₁, 3₂, ..., 3ₙ) ansteuert.

2. Verfahren zur Fernsteuerung gemäss Anspruch 1, **dadurch gekennzeichnet, dass** der Stromadapter (2₀, 2₁, 2₂, ..., 2ₙ) den Stromverbrauch des elektrischen Verbrauchers (3₀, 3₁, 3₂, ..., 3ₙ) misst und die Daten des Stromadapters (2₀, 2₁, 2₂, ..., 2ₙ) kontinuierlich an den E-Server (4) übermittelt werden.

3. Verfahren zur Fernsteuerung gemäss Anspruch 1 oder 2,
**dadurch gekennzeichnet, dass** der E-Server (4) den Typ des elektrischen Verbrauchers (3₀, 3₁, 3₂, ..., 3ₙ)ermittelt.

4. Verfahren zur Fernsteuerung gemäss Anspruch 3, **dadurch gekennzeichnet, dass** der E-Server (4) den Typ des elektrischen Verbrauchers (3₀, 3₁, 3₂, ..., 3ₙ) auf der Basis des gemessenen Stromverbrauchs des elektrischen Verbrauchers bestimmt.

5. Verfahren zur Fernsteuerung gemäss Anspruch 3, **dadurch gekennzeichnet, dass** der E-Server (4) den Typ des elektrischen Verbrauchers (3₀, 3₁, 3₂, ..., 3ₙ) auf der Basis von Protokollen bestimmt.

6. Verfahren zur Fernsteuerung gemäss Anspruch 1 oder 2,
**dadurch gekennzeichnet, dass** der Typ des elektrischen Verbrauchers (3₀, 3₁, 3₂, ..., 3ₙ) dem E-Server (4) von einem Kunden bekannt geben wird.

7. Verfahren zur Fernsteuerung gemäss einem der Ansprüche 1 bis 6, **dadurch gekennzeichnet, dass** der E-Server (4) Verbrauchsdaten des elektrischen Verbrauchers (3₀, 3₁, 3₂, ..., 3ₙ) in einer Datenbank (6₁) speichert.

8. Verfahren zur Fernsteuerung gemäss einem der Ansprüche 1 bis 7, **dadurch gekennzeichnet, dass** der E-Server (4) einen zweiten Server (5) kontaktiert und ermittelt, wann der elektrische Verbraucher (3₀, 3₁, 3₂, ..., 3ₙ) eingeschaltet werden soll.

9. Verfahren zur Fernsteuerung gemäss einem der Ansprüche 1 bis 8, **dadurch gekennzeichnet, dass** ein Kunde die Stromzufuhr zu dem elektrischen Verbraucher (3₀, 3₁, 3₂, ..., 3ₙ) einschaltet, indem er auf den E-Server (4) über das Internet (7) oder ein Mobilfunknetz zugreift und einen entsprechend Befehl eingibt.

10. Verfahren zur Fernsteuerung gemäss einem der Ansprüche 1 bis 9, **dadurch gekennzeichnet, dass** der E-Server (4) und die Stromadapter (2₀, 2₁, 2₂, ..., 2ₙ) über das Internet oder ein LAN miteinander kommunizieren.

11. Verfahren zur Fernsteuerung gemäss einem der Ansprüche 1 bis 10, **dadurch gekennzeichnet, dass** das Stromsparprofil eine Steuerung der Stromzufuhr des elektrischen Verbrauchers (3₀, 3₁, 3₂, ..., 3ₙ) enthält, die durch gezieltes Ein- und Ausschalten den Stromverbrauch des elektrischen Verbrauchers (3₀, 3₁, 3₂, ..., 3ₙ) reduziert ohne die eigentliche Funktion des elektrischen Verbrauchers (3₀, 3₁, 3₂, ..., 3ₙ) zu beeinträchtigen.

12. System (1) umfassend einen zentralen E-Server (4) zur Fernsteuerung eines elektrischen Verbrauchers (3₀, 3₁, 3₂, ..., 3ₙ) mit einem Stromadapter (2₀, 2₁, 2₂, ..., 2ₙ) zur Ein- und Abschaltung der Stromzufuhr des elektrischen Verbrauchers (3₀, 3₁, 3₂, ..., 3ₙ), **dadurch gekennzeichnet, dass**
der zentrale E-Server (4) ausgebildet ist, in Abhängigkeit vom automatisch erkannten Typ des elektrischen Verbrauchers (3₀, 3₁, 3₂, ..., 3ₙ) ein dem Typ des elektrischen Verbrauchers zugeordnetes Stromsparprofil auszuwählen und den Stromadapter (2₀, 2₁, 2₂, ..., 2ₙ) in Abhängigkeit des ausgewählten Stromsparprofils durch das Ein- und Abschalten der Stromzufuhr des elektrischen Verbrauchers (3₀, 3₁, 3₂, ..., 3ₙ) anzusteuern.

13. System gemäss Anspruch 12, **dadurch gekennzeichnet, dass** der elektrische Verbraucher (3₀, 3₁, 3₂, ..., 3ₙ) ein Kühlschrank, ein Videorekorder, eine Set-Top-Box, eine Stereoanlage, ein Fernseher (TV) oder ein internetbasierter Fernseher (TV) ist.

14. System gemäss Anspruch 12 oder 13, **dadurch gekennzeichnet, dass** der Stromadapter (2₀, 2₁, 2₂, ..., 2ₙ) und der E-Server (4) über das Internet verbunden sind und darüber kommunizieren können.

15. System gemäss einem der Ansprüche 12 bis 14, **dadurch gekennzeichnet, dass** der Stromadapter (2₀, 2₁, 2₂, ..., 2ₙ) ein Gehäuse aufweist mit einem Stecker zur Verbindung mit der Stromversorgung und eine Steckdose zur Verbindung mit dem elektrischen Verbraucher (3₀, 3₁, 3₂, ..., 3ₙ) aufweist.
